(19) Europäisches Patentamt
European Patent Office
Office européen des brevets

(11) **EP 2 709 261 A1**

(12) **EUROPEAN PATENT APPLICATION**
published in accordance with Art. 153(4) EPC

(43) Date of publication:
**19.03.2014 Bulletin 2014/12**

(51) Int Cl.:
**H02M 7/48** *(2007.01)*     **H02M 7/487** *(2007.01)*

(21) Application number: **13750253.0**

(22) Date of filing: **25.01.2013**

(86) International application number:
**PCT/CN2013/070985**

(87) International publication number:
**WO 2014/005428 (09.01.2014 Gazette 2014/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.07.2012   CN 201210227636**

(71) Applicant: **Huawei Technologies Co., Ltd.
Shenzhen, Guangdong 518129 (CN)**

(72) Inventors:
• **GUO, Haibin
Shenzhen
Guangdong 518129 (CN)**
• **LIU, Yunfeng
Shenzhen
Guangdong 518129 (CN)**
• **WANG, Dan
Shenzhen
Guangdong 518129 (CN)**

(74) Representative: **Isarpatent
Patent- und Rechtsanwälte
Friedrichstrasse 31
80801 München (DE)**

(54)     **INVERTER AND PWM MODULATION METHOD THEREOF**

(57)     The present invention discloses an inverter and its PWM modulation method, where the PWM modulation method includes providing a modulation signal, obtaining an amplitude value of a third harmonic according to a modulation ratio of the modulation signal, injecting the third harmonic into the modulation signal and generating a PWM drive signal, and inputting the PWM drive signal into the control end of an inverter switch tube to control turning on or turning off of the inverter switch tube. Through the foregoing method, the present invention can achieve that the inverter has maximum bus utilization and minimum common-mode voltage to avoid generating relatively high ground leakage current and relatively serious electromagnetic interference.

FIG. 1

EP 2 709 261 A1

## Description

### TECHNICAL FIELD

The present invention relates to the field of inverters, and in particular, to an inverter and its PWM modulation method.

### BACKGROUND

Inverters play an important role in the field of renewable energy development and utilization. Inverters are a kind of power electronic converters, which convert direct current to alternating current by using the turning on and turning off functions of power semiconductor switch apparatuses. An inverter in the prior art improves bus voltage utilization by injecting common-mode voltage into a PWM (Pulse Width Modulation, pulse-width modulation) signal, where the common-mode voltage is the dropout voltage between an output midpoint of the inverter and a grounded chassis with stable electric potential. Common-mode voltage has relatively high voltage and high frequency components, and a coupling capacitance exists between load of an output of the inverter and the grounded chassis, so the coupling capacitance generates leakage current after the common-mode voltage is injected into the PWM signal, and when an amplitude value of the leakage current surpasses a threshold, due to a high frequency part of the common-mode voltage, electromagnetic radiation generated by current is output, which further leads to electromagnetic interference.

### SUMMARY

In view of this, the present invention provides an inverter and its PWM modulation method, so as to achieve that the inverter has maximum bus utilization and minimum output common-mode voltage.

A first aspect provides a PWM modulation method, which includes providing a modulation signal, obtaining an amplitude value of a third harmonic according to a modulation ratio M of the modulation signal, injecting the third harmonic into the modulation signal and generating a PWM drive signal, and inputting the PWM drive signal into the control end of an inverter switch tube to control turning on or turning off of the inverter switch tube.

A first aspect provides an inverter, which includes a processing unit that is configured to generate a modulation signal and a third harmonic, where the processing unit obtains an amplitude value of the third harmonic according to a modulation ratio M of the modulation signal, injects the third harmonic into the modulation signal and generates a PWM drive signal, and inputs the PWM drive signal into the control end of an inverter switch tube to control turning on or turning off of the inverter switch tube.

Beneficial effects of the present invention are: in the present invention, a PWM drive signal is generategenerated by injecting a third harmonic into a modulation signal, where an amplitude value of the injected third harmonic is controlled according to a modulation ratio M and the PWM drive signal is input into the control end of an inverter switch tube, so as to achieve that the inverter has maximum bus utilization and minimum output common-mode voltage to avoid generating relatively high ground leakage current and relatively serious electromagnetic interference.

### BRIEF DESCRIPTION OF DRAWINGS

To illustrate the technical solutions in the embodiments of the present invention more clearly, the following briefly introduces the accompanying drawings needed for describing the embodiments. Apparently, the accompanying drawings in the following description show merely some embodiments of the present invention, and persons of ordinary skill in the art may still derive other drawings from these accompanying drawings without creative efforts, where

FIG. 1 is a flowchart of Embodiment 1 of a PWM modulation method in the present invention;
FIG. 2 is a schematic curve diagram of a relationship between a modulation ratio and an injected value of a third harmonic in Embodiment 2 of a PWM modulation method of the present invention;
FIG. 3 is a circuit diagram of an inverter in Embodiment 1 of the present invention;
FIG. 4 is a schematic diagram of injecting a third harmonic to generate a PWM drive signal;
FIG. 5 is a circuit diagram of an inverter in Embodiment 3 of the present invention;
FIG. 6 is a circuit diagram of an inverter in Embodiment 4 of the present invention;
FIG. 7 is a circuit diagram of an inverter in Embodiment 5 of the present invention;
FIG. 8 is a circuit diagram of an inverter in Embodiment 6 of the present invention; and
FIG. 9 is a circuit diagram of an inverter in Embodiment 7 of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

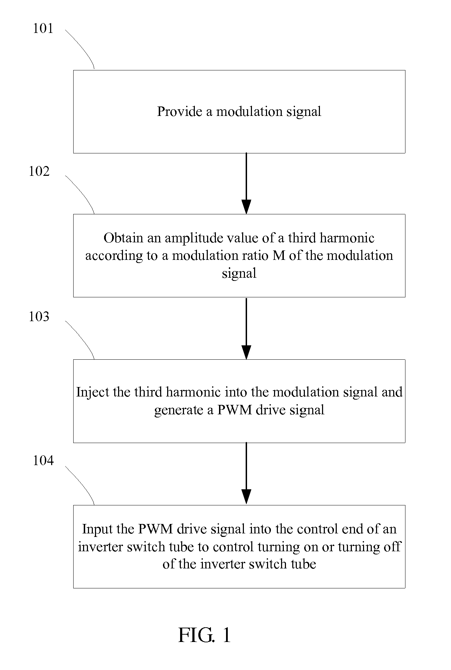

Referring to FIG. 1, FIG. 1 is a flowchart of Embodiment 1 of a PWM modulation method in the present invention. The PWM modulation method disclosed in the embodiment is applied to an inverter, where a direct current bus of the inverter inputs direct current voltage; and a processing unit of the inverter controls turning on or turning off of an inverter switch tube according to the PWM modulation method, so as to make the inverter output alternating current voltage. As shown in FIG. 1, the PWM modulation method disclosed in the embodiment includes the following steps:

Step 101: Provide a modulation signal.

Step 102: Obtain an amplitude value of a third harmonic according to a modulation ratio M of the modulation signal.

Step 103: Inject the third harmonic into the modulation signal and generate a PWM drive signal.

Step 104: Input the PWM drive signal into the control end of an inverter switch tube to control turning on or turning off of the inverter switch tube.

In the embodiment, the processing unit provides the modulation signal, and obtains the amplitude value of the third harmonic according to the modulation ratio M of the modulation signal. The third harmonic is a sine wave and its frequency is three times the frequency of the modulation signal. Then, the processing unit injects the third harmonic into the modulation signal, generates the PWM drive signal, and inputs the PWM drive signal into the control end of the inverter switch tube to control turning on or turning off of the inverter switch tube, so as to achieve that the inverter has relatively high bus utilization and relatively low output common-mode voltage.

In the embodiment, the processing unit exemplarily overlaps the third harmonic with the modulation signal to inject the third harmonic into the modulation signal. In other embodiments, a person of skill in the art field may inject a third harmonic into a modulation signal by other means. Besides, a digital signal processor is exemplarily selected as the processing unit.

Different from the situations in the prior art, the PWM modulation method in the embodiment is to generate the PWM signal by injecting the third harmonic into the modulation signal, where the amplitude value of the injected third harmonic injected is controlled according to the modulation ratio M, and the PWM drive signal is input into the control end of the inverter, so as to achieve that the inverter have relatively high bus utilization and relatively low output common-mode voltage.

The present invention further provides Embodiment 2 of the PWM modulation method. Based on the foregoing Embodiment 1, a modulation ratio M of a modulation signal is as follows:

$$M = \frac{V_{ref}}{0.5V_{dc}} ;$$

where $V_{ref}$ is an amplitude value of the modulation signal, and $V_{dc}$, is a voltage value of a direct current bus of an inverter.

In step 102, the processing unit obtains the amplitude value of the third harmonic according to the modulation ratio M of the modulation signal, where the value includes:

when the modulation ratio M<=1, the amplitude value of the third harmonic is 0;

when the modulation ratio $M = \frac{2}{\sqrt{3}}$ , the amplitude value of the third harmonic is 1/6 of the amplitude value of the modulation signal; and

when $1 < M < \frac{2}{\sqrt{3}}$ , the third harmonic is a third harmonic with a minimum amplitude value.

When $1 < M < \dfrac{2}{\sqrt{3}}$, the third harmonic with the minimum amplitude value and the modulation ratio M satisfy the following equation:

$$b = \max((1 - M\sin(wt))/\sin(3wt)) \qquad\qquad (1)$$

where b is a ratio of an amplitude value of the third harmonic with the minimum amplitude value to an amplitude value of the modulation signal.

In the embodiment, methods for the processing unit to solve an equation (1) include: a real-time solving method, a curve fitting method and a table lookup method. The following specifically illustrates the methods to solve the equation (1) to obtain the amplitude value of the third harmonic with the minimum amplitude value.

In the embodiment, the processing unit uses the real-time solving method to obtain the amplitude value of the third harmonic with the minimum amplitude value, that is, the processing unit substitutes an actual modulation ratio M into the equation (1), and solves the equation (1) in real time to calculate the amplitude value of the third harmonic with the minimum amplitude value. However, real-time solving of the equation (1) needs to process a great amount of data.

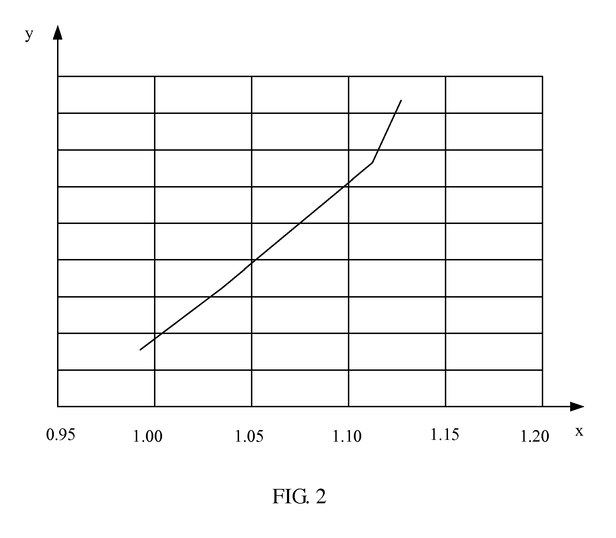

The processing unit substitutes the value of the modulation ratio M into the equation (1) to obtain the amplitude value of the corresponding third harmonic with the minimum amplitude value. A curve of a relationship between the modulation ratio M and the amplitude value of the third harmonic with the minimum amplitude value is drawn, which is shown in FIG. 2, where horizontal ordinate x represents the modulation ratio M, and the vertical coordinate y represents the amplitude value of the third harmonic with the minimum amplitude value.

In the embodiment, the processing unit may also use the curve fitting method to obtain the amplitude value of the third harmonic with the minimum amplitude value, that is, the processing unit performs curve fitting on the curve of the relationship between the modulation ratio M and the amplitude value of the third harmonic with the minimum amplitude value to obtain an approximate function b=f(M) of the relationship between the modulation ratio M and the amplitude value of the third harmonic with the minimum amplitude value, such as a polynomial of multiple degree $b = a_n M^n + a_{n-1} M^{n-1} + \cdots + a1$ , then substitutes the actual modulation ratio M into the approximate function of the relationship between the modulation ratio M and the amplitude value of the third harmonic with the minimum amplitude value to calculate the amplitude value of the third harmonic with the minimum amplitude value.

In the embodiment, the processing unit may also use the table lookup method to obtain the amplitude value of the third harmonic with the minimum amplitude value, that is, the processing unit preprograms a table about the relationship between the modulation ratio M and the amplitude value of the third harmonic with the minimum amplitude value. The amplitude value of the third harmonic with the minimum amplitude value is determined by using the table lookup method, that is, the amplitude value of the third harmonic with the minimum amplitude value is queried in the relationship table according to the actual modulation ratio M. When the modulation ratio M is between two neighboring discrete data points in the relationship table, the amplitude value of the third harmonic with the minimum amplitude value that corresponds to the modulation ratio M may be obtained by using a linear interpolation method and an approximate method.

For example, two neighboring discrete data points are A1 (x1, y1) and B1 (x2, y2) respectively, and an actual data point is (x, y), where the three points satisfy the following relationship formula (2):

$$y = y1 + (y2 - y1) * (x - x1)/(x2 - x1) \qquad\qquad (2)$$

where the amplitude value y of the third harmonic with the minimum amplitude value may be obtained by solving the relationship formula (2).

The processing unit may determine that the modulation ratio M is between the two neighboring discrete data points in the relationship table by using the approximate method, so as to obtain the amplitude value of the third harmonic with the minimum amplitude value that corresponds to the modulation ratio M, where a commonly-used example of the approximate method is a rounding-off method.

It should be noted that the PWM modulation method is sine wave modulation in the embodiment, and a person of ordinary skill in the art may select other modulation methods in other embodiments, for example, space sector modulation.

Different from the situations in the prior art, in the PWM modulation method of the embodiment of the present invention, the PWM drive signal is generategenerated by injecting the third harmonic into the modulation signal, where the PWM drive signal is input into the control end of the inverter switch tube, so as to achieve that the inverter has maximum bus utilization and minimum output common-mode voltage to avoid generating relatively high ground leakage current and relatively serious electromagnetic interference.

The following further illustrates an implementation process of the PWM modulation method in the embodiment of the present invention in detail with reference to a structure of the inverter in the present invention.

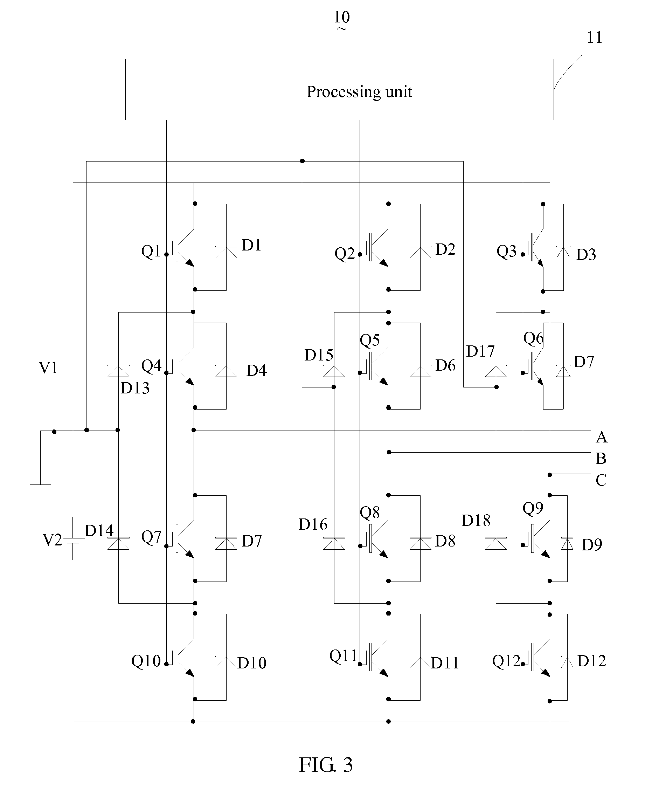

Referring FIG. 3, FIG. 3 is a circuit diagram of an inverter in Embodiment 1 of the present invention. In the embodiment, an inverter 10 is a three-level I-type inverter. As shown in FIG. 1, the inverter 10 in the embodiment includes: direct current sources V1 and V2, diodes D1, D2, D3, D4, D5, D6, D7, D8, D9, D10, D11, D12, D13, D 14, D15, D16, D 17, and D 18, switch tubes Q1, Q2, Q3, Q4, Q5, Q6, Q7, Q8, Q9, Q10, Q11 and Q12, output ends A, B and C, and a processing unit 11.

D1 and Q1 are connected in parallel, D2 and Q2 are connected in parallel, D3 and Q3 are connected in parallel, D4 and Q4 are connected in parallel, D5 and Q5 are connected in parallel, D6 and Q6 are connected in parallel, D7 and Q7 are connected in parallel, D8 and Q8 are connected in parallel, D9 and Q9 are connected in parallel, D10 and Q10 are connected in parallel, D11 and Q11 are connected in parallel, D12 and Q12 are connected in parallel, Q1, Q4, Q7 and Q10 are connected in serial, Q2, Q5, Q8 and Q11 are connected in serial, Q3, Q6, Q9 and Q12 are connected in serial, D13 and D14 are connected to Q4 and Q7 in parallel, D15 and D16 are connected to D5 and D8 in parallel, and D17 and D18 are connected to Q6 and Q9 in parallel.

The negative terminal of the direct current source current V1 and the positive terminal of the direct current source V2 are grounded, the positive terminal of the direct source current V1 is connected to the collector of the Q1, the collector of the Q2, and the collector of the Q3, and the negative terminal of the direct current source V2 is connected to the emitter of the Q10, the emitter of the Q11 and the emitter of the Q12. The anode of the D13, the cathode of the D14, the anode of the D15, the cathode of the D16, the anode of the D17 and the cathode of the D18 are grounded.

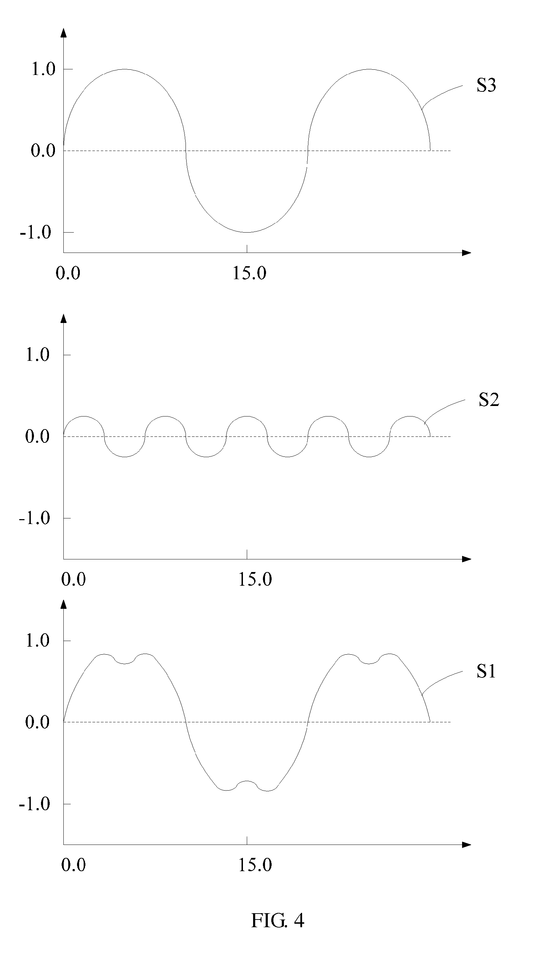

The inverter 10 inputs a PWM drive signal S1 that is generated by the processing unit 11 into the base of a switch tube to control an action to turn on or turn off the inverter switch tube, that is, the process unit 11 injects a third harmonic S2 into a modulation signal S3 to generate the PWM drive signal S1, which is shown in FIG. 4. Besides, the processing unit 11 controls an amplitude value of the third harmonic S2 according to a modulation ratio M, so as to achieve that the inverter 10 has relatively high bus utilization and relatively low output common-mode voltage. The third harmonic S2 is a sine wave and its frequency is three times a frequency of the modulation signal S3.

It should be noted that a digital signal processor is exemplarily selected as the processing unit 11.

The present invention further provides Embodiment 2 of the inverter. Based on the inverter 10 in Embodiment 1 of the present invention, in Embodiment 2, the modulation ratio M of the modulation signal S3 is as follows:

$$\text{M}=\frac{V_{ref}}{0.5V_{dc}} \; ;$$

where $V_{ref}$ is an amplitude value of the modulation signal S3, and $V_{dc}$ is a voltage value of a direct current bus of the inverter 10.

In the embodiment, the processing unit 11 divides the modulation ratio M into three areas:

when the modulation ratio M<=1, the amplitude value of the third harmonic S2 is 0;

when the modulation ratio $\text{M}=\frac{2}{\sqrt{3}}$ , the amplitude value of the third harmonic S2 is 1/6 of the amplitude value of the modulation signal S3; and

when $1<\text{M}<\frac{2}{\sqrt{3}}$ , the third harmonic S2 is the third harmonic with the minimum amplitude value.

In the embodiment, the inverter 10 satisfies the following equation (3):

$$V_{ref} * \sin(wt) + bV_{ref} * \sin(3wt) < V_{dc} / 2 \qquad\qquad (3)$$

the equation (2) may be converted to be:

$$b < \frac{1 - M * \sin(wt)}{M * \sin(3wt)} \qquad (4)$$

according to the equation (4), b satisfies the equation (1):

$$b = \max((1 - M\sin(wt))/\sin(3wt))$$

where b is a ratio of an amplitude value of the third harmonic with the minimum amplitude value to an amplitude value of the modulation signal S3.

In the embodiment, methods for the processing unit 11 to solve the equation (1) include: a real-time solving method, a curve fitting method and a table lookup method. The following specifically illustrates the methods to solve the equation (1) to obtain the amplitude value of the third harmonic with the minimum amplitude value.

In the embodiment, the processing unit 11 uses the real-time solving method to obtain the amplitude value of the third harmonic with the minimum amplitude value, that is, the processing unit substitutes an actual modulation ratio M into the equation (1), and solves the equation (1) in real time to calculate the amplitude value of the third harmonic with the minimum amplitude value. However, real-time solving of the equation (1) by the processing unit 11 needs to process a great amount of data.

In the embodiment, the processing unit 11 may also use the curve fitting method to obtain the amplitude value of the third harmonic with the minimum amplitude value, that is, the processing unit performs curve fitting on the curve of a relationship between the modulation ratio M and the amplitude value of the third harmonic with the minimum amplitude value to obtain an approximate function b=f(M) of the relationship between the modulation ratio M and the amplitude value of the third harmonic with the minimum amplitude value, such as a polynomial of multiple *degree* $b = a_n M^n + a_{n-1} M^{n-1} + \cdots + a1$, then substitutes the actual modulation ratio M into the approximate function of the relationship between the modulation ratio M and the amplitude value of the third harmonic with the minimum amplitude value to calculate the injected value of the third harmonic S3. The curve of the relationship between the modulation ratio M and the amplitude value of the third harmonic with the minimum amplitude value is shown in FIG. 2.

In the embodiment, the processing unit 11 may also use the table lookup method to obtain the amplitude value of the third harmonic with the minimum amplitude value, that is, the processing unit preprograms a table about the relationship between the modulation ratio M and the amplitude value of the third harmonic with the minimum amplitude value. The amplitude value of the third harmonic with the minimum amplitude value is determined by using the table lookup method, that is, the amplitude value of the third harmonic with the minimum amplitude value is queried according to the actual modulation ratio M in the relationship table. When the modulation ratio M is between two neighboring discrete data points in the relationship table, the amplitude value of the third harmonic with the minimum amplitude value that corresponds to the modulation ratio M is obtained by using a linear interpolation method and an approximate method.

For example, two neighboring discrete data points are A1 (x1 y1) and B1 (x2, y2) respectively, and an actual data point is (x, y), where the three points satisfy the following relationship formula (2):

$$y = y1 + (y2 - y1) * (x - x1)/(x2 - x1) \qquad (2)$$

where the amplitude value y of the third harmonic with the minimum amplitude value may be obtained by solving the relationship formula (2).

The processing unit 11 may determine that the modulation ratio M is between the two neighboring discrete data points in the relationship table by using the approximate method, so as to obtain the amplitude value of the third harmonic with the minimum amplitude value that corresponds to the modulation ratio M, where an example of a commonly-used approximate method is a rounding-off method.

It should be noted that the inverter 10 is modulated by using a sine wave modulation method in the embodiment, and a person of ordinary skill in the art may select other modulation methods in other embodiments, for example, a space sector modulation method.

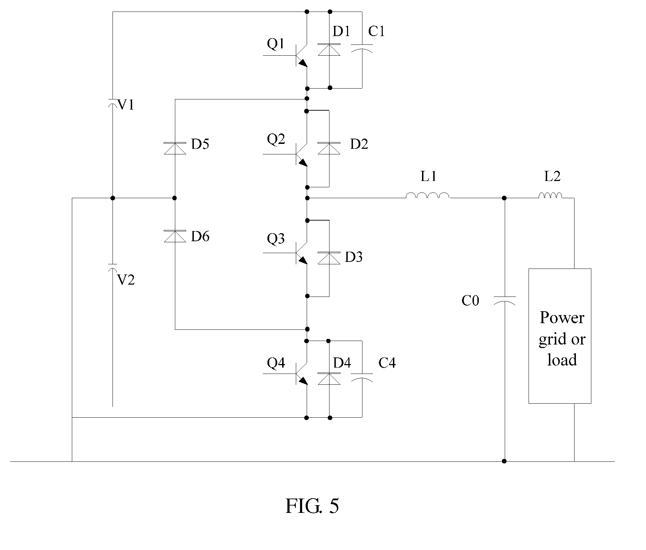

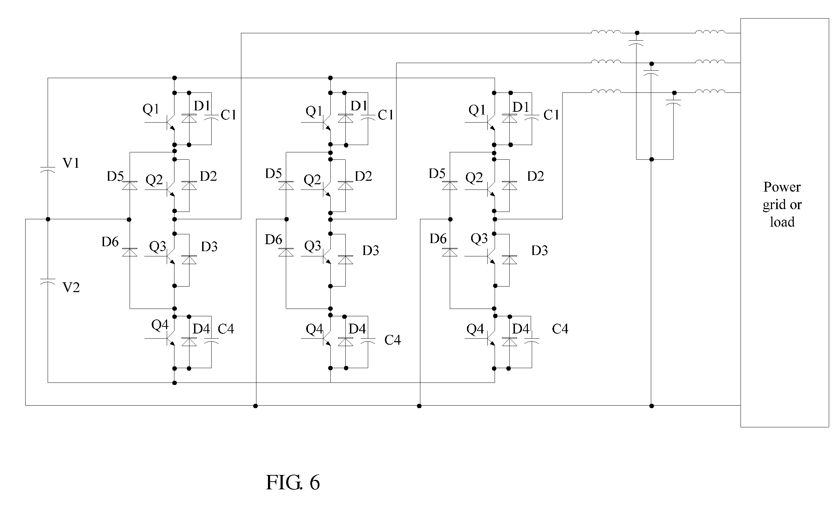

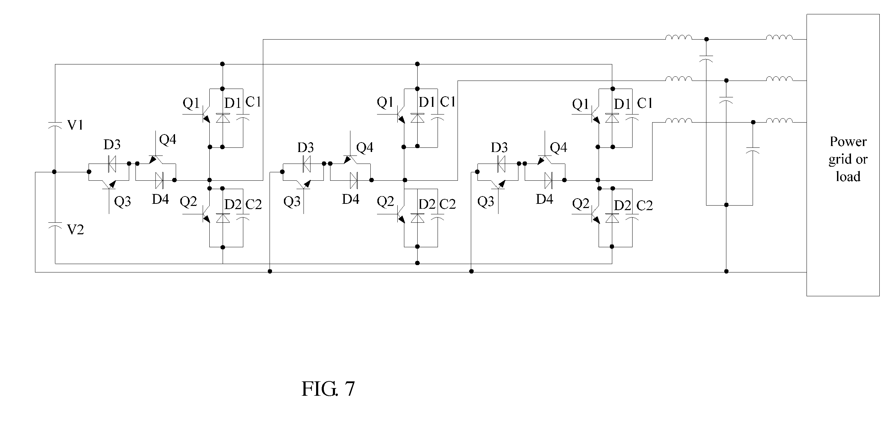

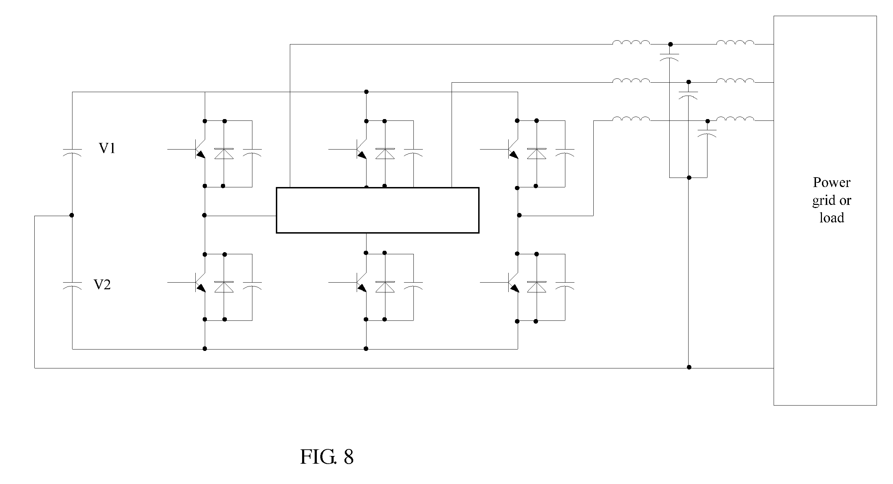

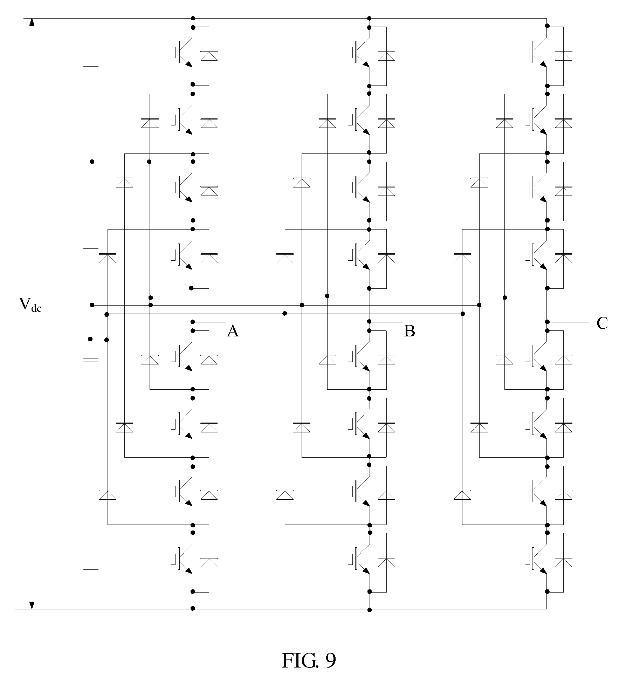

Besides, the inverter 10 in the embodiment of the present invention has other implementation manners except for a topology manner shown in FIG. 3. For example,
a single-phase I-type three-level inverter shown in FIG. 5 or a single-phase T-type three-level inverter (not shown);
a three-phase I-type three-level inverter shown in FIG. 6;
a three-phase T-type three-level inverter shown in FIG. 7;
a three-phase two-level inverter shown in FIG. 8; and
a three-phase multilevel inverter shown in FIG. 9.

It should be understood that the inverters shown in FIG. 5 to FIG. 9 and the inverter 10 in FIG. 2 have the same PWM modulation method. Reference is made to the preceding part, and the PWM modulation method is not described here again.

Different from the situations in the prior art, in the present invention, the PWM drive signal is generategenerated by injecting the third harmonic into the modulation signal, and the PWM drive signal is input into the control end of the inverter switch tube, so as to achieve that the inverter has maximum bus utilization and minimum output common-mode voltage to avoid generating relatively high ground leakage current and relatively serious electromagnetic interference.

The foregoing descriptions are merely embodiments of the present invention, and the protection scope of the present invention is not limited thereto. All equivalent structural or process changes made according to the content of this specification and accompanying drawings in the present invention or by directly or indirectly applying the present invention in other relevant technical fields shall fall within the protection scope of the present invention.

**Claims**

1. A PWM modulation method, comprising:

   providing a modulation signal;
   obtaining an amplitude value of a third harmonic according to a modulation ratio M of the modulation signal;
   injecting the third harmonic into the modulation signal and generating a PWM drive signal; and
   inputting the PWM drive signal into the control end of an inverter switch tube to control turning on or turning off of the inverter switch tube.

2. The modulation method according to claim 1, wherein the modulation ratio M of the modulation signal is:

$$M = \frac{V_{ref}}{0.5 V_{dc}} ;$$

   wherein $V_{ref}$ is an amplitude value of the modulation signal, and $V_{dc}$, is a voltage value of a direct current bus of the inverter.

3. The modulation method according to claim 2, wherein steps to obtain an amplitude value of a third harmonic according to the modulation ratio of the modulation signal comprises:

   when the modulation ratio $M <= 1$, the amplitude value of the third harmonic is 0;

   when the modulation ratio $M = \frac{2}{\sqrt{3}}$, the amplitude value of the third harmonic is 1/6 of the amplitude value of the modulation signal; and

   when $1 < M < \frac{2}{\sqrt{3}}$, the third harmonic is the third harmonic with the minimum amplitude value.

4. The modulation method according to claim 3, wherein when $1 < M < \frac{2}{\sqrt{3}}$, the third harmonic with the minimum amplitude value and the modulation ratio M satisfy the following equation:

$$b=\max((1-M\sin(wt))/\sin(3wt));$$

wherein b is a ratio of an amplitude value of the third harmonic with the minimum amplitude value to an amplitude value of the modulation signal.

5. The modulation method according to claim 4, wherein the amplitude value of the third harmonic with the minimum amplitude value is calculated by solving the equation in real time.

6. The modulation method according to claim 4, wherein an approximate function of the modulation ratio M and the amplitude value of the third harmonic with the minimum amplitude value is obtained by performing curve fitting on a preset curve of the modulation ratio M and the amplitude value of the third harmonic with the minimum amplitude value, then the amplitude value of the third harmonic with the minimum amplitude value is calculated by substituting an actual modulation ratio M into the approximate function of the modulation ratio M and the amplitude value of the third harmonic with the minimum amplitude value.

7. The modulation method according to claim 4, wherein a table of a relationship between the modulation ratio M and the amplitude value of the third harmonic with the minimum amplitude value is programmed according to the equation, and the amplitude value of the third harmonic with the minimum amplitude value is obtained by using a table lookup method according an actual modulation ratio M.

8. The modulation method according to claim 7, wherein the amplitude value of the third harmonic with the minimum amplitude value when the modulation ratio M is between two neighboring discrete data points in the relationship table is determined by using a linear interpolation method.

9. The modulation method according to claim 7, wherein the amplitude value of the third harmonic with the minimum amplitude value when the modulation ratio M is between two neighboring discrete data points in the relationship table is determined by using an approximate method.

10. The modulation method according to claim 1, wherein the PWM modulation method is sine wave modulation.

11. The modulation method according to claim 1, wherein the PWM modulation method is space sector modulation.

12. An inverter, wherein the inverter comprises a processing unit, configured to generate a modulation signal and a third harmonic, wherein the processing unit obtains an amplitude value of the third harmonic according to a modulation ratio M of the modulation signal, injects the third harmonic into the modulation signal and generates a PWM drive signal, and inputs the PWM drive signal into the control end of an inverter switch tube to control turning on or turning off of the inverter switch tube.

13. The inverter according to claim 12, wherein the modulation ratio M of the modulation signal is:

$$M=\frac{V_{ref}}{0.5V_{dc}};$$

wherein $V_{ref}$ is an amplitude value of the modulation signal, and $V_{dc}$, is a voltage value of the a direct current bus of the inverter.

14. The inverter according to claim 13, wherein a processing unit obtains an amplitude value of a third harmonic according to the modulation ratio of the modulation signal, wherein

when the modulation ratio M<=1, the amplitude value of the third harmonic is 0;

when the modulation ratio $M = \dfrac{2}{\sqrt{3}}$, the amplitude value of the third harmonic is 1/6 of the amplitude value of the modulation signal; and

when $1 < M < \dfrac{2}{\sqrt{3}}$, the third harmonic is the third harmonic with the minimum amplitude value.

15. The inverter according to claim 14, wherein when $1 < M < \dfrac{2}{\sqrt{3}}$, the third harmonic with the minimum amplitude value and the modulation ratio M satisfy the following equation:

$$b = \max((1 - M\sin(wt))/\sin(3wt));$$

wherein b is a ratio of an amplitude value of the third harmonic with the minimum amplitude value to an amplitude value of the modulation signal.

16. The inverter according to claim 15, wherein a processing unit calculates the amplitude value of the third harmonic with the minimum amplitude value by solving the equation in real time.

17. The inverter according to claim 15, wherein a processing unit performs curve fitting on a preset curve of the modulation ratio M and the amplitude value of the third harmonic with the minimum amplitude value to obtain an approximate function of the modulation ratio M and the amplitude value of the third harmonic with the minimum amplitude value, then substitutes an actual modulation ratio M into the approximate function of the modulation ratio M and the amplitude value of the third harmonic with the minimum amplitude value to calculate the amplitude value of the third harmonic with the minimum amplitude value.

18. The inverter according to claim 15, wherein a processing unit preprograms a table about a relationship between the modulation ratio M and the amplitude value of the third harmonic with the minimum amplitude value according to the equation, and obtains the amplitude value of the third harmonic with the minimum amplitude value by using a table lookup method according to an actual modulation ratio M.

19. The inverter according to claim 18, wherein the processing unit uses a linear interpolation method to determine the amplitude value of the third harmonic with the minimum amplitude value when the modulation ratio M is between two neighboring discrete data points in the relationship table.

20. The inverter according to claim 18, wherein the processing unit uses an approximate method to determine the amplitude value of the third harmonic with the minimum amplitude value when the modulation ratio M is between two neighboring discrete data points in the relationship table.

21. The inverter according to claim 12, wherein the inverter modulates by using a sine modulation method.

22. The inverter according to claim 12, wherein the inverter modulates by using a space sector modulation method.

23. The inverter according to claim 12, wherein the inverter is a single-phase inverter, and its topology structure is an I-type three-level inverter or a T-type three-level inverter.

24. The inverter according to claim 12, wherein the inverter is a three-phase inverter, and its topology structure is an I-type three-level inverter or a T-type three-level inverter.

25. The inverter according to claim 12, wherein the inverter is a three-phase two-level inverter or a three-phase multilevel inverter.

Provide a modulation signal

Obtain an amplitude value of a third harmonic according to a modulation ratio M of the modulation signal

Inject the third harmonic into the modulation signal and generate a PWM drive signal

Input the PWM drive signal into the control end of an inverter switch tube to control turning on or turning off of the inverter switch tube

FIG. 1

FIG. 2

$\underset{\sim}{10}$

11

Processing unit

Q1 D1

Q2 D2

Q3 D3

V1

D15 Q5 D6

D17 Q6 D7

D13 Q4 D4

A

B

C

V2 D14 Q7 D7

D16 Q8 D8

D18 Q9 D9

Q10 D10

Q11 D11

Q12 D12

FIG. 3

FIG. 4

FIG. 5

FIG. 6

FIG. 7

FIG. 8

FIG. 9

<table>
<tr><td rowspan="2" align="center">**INTERNATIONAL SEARCH REPORT**</td><td>International application No.</td></tr>
<tr><td>**PCT/CN2013/070985**</td></tr>
</table>

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H02M 7/00, H02M 7/42, H02M 7/44, H02M 7/48, H02P 21/00, H02J 1/00, H02P 3/00, H02P 3/06, H02P 3/18

Documentation searched other than minimum documentation to the extent that such documents are included in the fields searched

Electronic data base consulted during the international search (name of data base and, where practicable, search terms used)

WPI, EPODOC, CNPAT, CNKI: PWM, pulse width; HARMONIC?, INVERTER?, MODULAT+

**C. DOCUMENTS CONSIDERED TO BE RELEVANT**

| Category* | Citation of document, with indication, where appropriate, of the relevant passages | Relevant to claim No. |
|---|---|---|
| X | CN 101237194 A (HITACHI LTD.), 06 August 2008 (06.08.2008), figures 1 and 5, and description, page 4, line 8 to page 8, line 12 | 1-2, 10-13, 21-25 |
| PX | CN 102723889 A (HUAWEI TECHNOLOGIES CO., LTD.), 10 October 2012 (10.10.2012), figures 1-9, and description, paragraphs [0017]-[0083] | 1-25 |
| A | CN 101154893 A (GENERAL ELECTRIC COMPANY), 02 April 2008 (02.04.2008), the whole document | 1-25 |
| A | CN 102301586 A (TOYOTA MOTOR CORP.), 28 December 2011 (28.12.2011), the whole document | 1-25 |
| A | US 8093746 B2 (GENERAL ELECTRIC COMPANY), 10 January 2012 (10.01.2012), the whole document | 1-25 |
| A | US 6501243 B1 (HITACHI, LTD.), 31 December 2002 (31.12.2002), the whole document | 1-25 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 April 2013 (02.04.2013) | **02 May 2013 (02.05.2013)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**WANG, Jian**<br><br>Telephone No.: (86-10) **62414162** |

Form PCT/ISA/210 (second sheet) (July 2009)

## INTERNATIONAL SEARCH REPORT
Information on patent family members

| International application No. |
| --- |
| **PCT/CN2013/070985** |

| Patent Documents referred in the Report | Publication Date | Patent Family | Publication Date |
| --- | --- | --- | --- |
| CN 101237194 A | 06.08.2008 | JP 2008193770 A | 21.08.2008 |
| | | JP 4303293 B2 | 29.07.2009 |
| | | CN 101237194 B | 16.05.2012 |
| CN 102723889 A | 10.10.2012 | None | |
| CN 101154893 A | 02.04.2008 | US 2008074907 A1 | 27.03.2008 |
| | | EP 1906517 A2 | 02.04.2008 |
| | | JP 2008086197 A | 10.04.2008 |
| | | US 7528505 B2 | 05.05.2009 |
| | | EP 1906517 A3 | 22.07.2009 |
| CN 102301586 A | 28.12.2011 | WO 2010086974 A1 | 05.08.2010 |
| | | US 2011279071 A1 | 17.11.2011 |
| | | EP 2393200 A1 | 07.12.2011 |
| | | JP 2010548293 T2 | 26.07.2012 |
| US 8093746 B2 | 10.01.2012 | US 2011141783 A1 | 16.06.2011 |
| | | WO 2011084227 A2 | 14.07.2011 |
| | | WO 2011084227 A3 | 02.08.2012 |
| US 6501243 B1 | 31.12.2002 | EP 1128543 A2 | 29.08.2001 |
| | | JP 2001245498 A | 07.09.2001 |
| | | JP 3681318 B2 | 10.08.2005 |
| | | EP 1128543 B1 | 29.08.2007 |
| | | DE 60036192 E | 11.10.2007 |
| | | DE 60036192 T2 | 21.05.2008 |

Form PCT/ISA/210 (patent family annex) (July 2009)

**INTERNATIONAL SEARCH REPORT**

International application No.

**PCT/CN2013/070985**

**A. CLASSIFICATION OF SUBJECT MATTER**

H02M 7/48 (2007.01) i

H02M 7/487 (2007.01) i